# EUROPEAN PATENT APPLICATION

(11) **EP 4 378 997 A1**
(43) Date of publication of application: **05.06.2024**
(21) Application number: 23843973.1
(22) Date of filing: 17.07.2023
(51) Int. Cl.: C08L 25/12, C08L 51/04, C08L 91/06, C08K 5/20, C08K 5/10

(54) **THERMOPLASTIC RESIN COMPOSITION, METHOD FOR PREPARING SAME, AND MOLDED PRODUCT MANUFACTURED THEREFROM**

(30) Priority: 20.10.2022 KR 20220135350
(71) Applicant: LG Chem, Ltd., Seoul 07336 (KR)
(72) Inventor: AN, Yong Hee, Daejeon 34122 (KR); KIM, Tae Hoon, Daejeon 34122 (KR); CHO, Yun Kyoung, Daejeon 34122 (KR); PARK, Chun Ho, Daejeon 34122 (KR); KIM, Ho Hoon, Daejeon 34122 (KR); JANG, Jeongmin, Daejeon 34122 (KR); YOON, Hyeok Jun, Daejeon 34122 (KR)
(74) Representative: Plasseraud IP
(86) International application number: PCT/KR2023/010154
(87) International publication number: WO 2024/085360

(57) **Abstract**

The present invention relates to a thermoplastic resin composition, a method of preparing the same, and a molded article manufactured using the same. More particularly, the present invention relates to a thermoplastic resin composition including 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C), wherein, based on 100 % by weight in total of the thermoplastic resin composition, a total content of rubber as measured by FT-IR is 15 to 21 % by weight, a method of preparing the thermoplastic resin composition, and a molded article manufactured using the thermoplastic resin composition.

According to the present invention, the present invention has an effect of providing a thermoplastic resin composition that does not contain phthalate-based compounds, which are environmental hormones harmful to the human body; does not emit toxic gases in case of fire; has excellent tensile strength, elongation, surface gloss, and surface hardness while having processability equal or superior to that of PVC resins which are conventional materials for calendaring; and is capable of imparting excellent appearance and durability.

## Description

### [Technical Field]

### [Cross-Reference to Related Application]

This application claims priority to Korean Patent Application No. 10-2022-0135350, filed on October 20, 2022, in the Korean Intellectual Property Office, the disclosure of which is incorporated herein by reference.

The present invention relates to a thermoplastic resin composition, a method of preparing the same, and a molded article manufactured using the same. More particularly, the present invention relates to a thermoplastic resin composition that does not contain phthalate-based compounds, which are environmental hormones harmful to the human body; does not emit toxic gases in case of fire; and is capable of securing excellent appearance and durability due to excellent tensile strength, elongation, surface gloss, and surface hardness while having processability equal or superior to that of PVC resins which are conventional materials for calendering, a method of preparing the thermoplastic resin composition, and a molded article manufactured using the thermoplastic resin composition.

### [Background Art]

A calender refers to a rolling machine in which several heating rollers are arranged. In addition, a process of forming a film, sheet, or the like using a calender or a process of coating the surface of fabric, paper, or the like with plastic using a calender is called a calender process or calendering. Compared to an extrusion process, the calendering has the disadvantage of high equipment cost, but the calendering can realize excellent quality. Accordingly, calendering is widely used in the manufacture of PVC films.

A polyvinyl chloride resin (hereinafter referred to as "PVC resin") is a homopolymer of vinyl chloride or a copolymer containing vinyl chloride in an amount of 50 % by weight or more, and is one of the five general-purpose thermoplastic resins prepared by suspension polymerization or emulsion polymerization. Thereamong, the PVC resin prepared by suspension polymerization is mixed with a plasticizer, a stabilizer, a filler, a pigment, titanium dioxide (TiO₂), and additives having special functions, and is widely used in the manufacture of films, sheets, wires, pipes, and the like through various processing methods. The PVC resin is widely used as a surface finishing material for furniture due to low cost, excellent physical properties, and high processability. However, the PVC resin is difficult to reprocess and generates harmful chlorine and hydrogen chloride gases when burned. In addition, a phthalate-based compound used as a plasticizer to impart flexibility is harmful to the human body, and hazardous substances are generated during preparation and disposal of the phthalate-based compound. Therefore, there is an increasing demand for eco-friendly materials that can replace the PVC resin in the market.

In the field of T-die extrusion, a polyethylene terephthalate resin is attracting attention due to excellent physical properties and high colorability thereof. In calendering extrusion, a polypropylene resin is used due to high economic efficiency thereof. However, the polypropylene resin is difficult to implement a luxurious appearance due to low colorability and gloss thereof, and thus use thereof is limited. Accordingly, demand for eco-friendly materials capable of calendering extrusion is increasing.

To solve these problems, research on materials that can replace the PVC resin is being actively conducted. Among the materials being studied, an acrylonitrile-styrene-acrylate resin (hereinafter referred to as "ASA resin") has excellent weather resistance, light resistance, colorability, chemical resistance, and impact resistance, and is used in various fields such as automobiles, building materials, and miscellaneous goods. In particular, compared to the PVC resin, the ASA resin is attracting attention as an eco-friendly material because the ASA resin has excellent processing stability and does not contain heavy metal components.

However, in the case of the conventional ASA resin for calendering, calendering processability is low due to poor elongation, and the quality of a manufactured sheet is degraded due to poor durability after molding.

Therefore, development of an ASA resin for calendering having excellent calendering processability and durability is required.

### [Related Art Documents]

### [Patent Documents]

KR 2006-0118820 A

### [Disclosure]

### [Technical Problem]

Therefore, the present invention has been made in view of the above problems, and it is one object of the present invention to provide a thermoplastic resin composition that does not contain phthalate-based compounds, which are environmental hormones harmful to the human body; does not emit toxic gases in case of fire; and has excellent tensile strength, elongation, and durability while having processability equal or superior to that of PVC resins which are conventional materials for calendaring, a method of preparing the thermoplastic resin composition, and a molded article manufactured using the thermoplastic resin composition.

The above and other objects can be accomplished by the present invention described below.

### [Technical Solution]

In accordance with one aspect of the present invention, provided is a thermoplastic resin composition including 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C), wherein, based on 100 % by weight in total of the thermoplastic resin composition, a total content of rubber as measured by FT-IR is 15 to 21 % by weight.

In accordance with another aspect of the present invention, provided is a thermoplastic resin composition including 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C), wherein the thermoplastic resin composition has a surface hardness of 95 or more as measured according to ASTM D785.

Based on a total weight of the graft copolymer (A-1), the graft copolymer (A-1) may preferably include 30 to 70 % by weight of alkyl acrylate rubber, 20 to 50 % by weight of an aromatic vinyl compound, and 1 to 25 % by weight of a vinyl cyanide compound.

Based on a total weight of the graft copolymer (A-2), the graft copolymer (A-2) may preferably include 30 to 70 % by weight of alkyl acrylate rubber, 20 to 50 % by weight of an aromatic vinyl compound, and 1 to 25 % by weight of a vinyl cyanide compound.

A weight ratio (A-1:A-2) of the graft copolymer (A-1) to the graft copolymer (A-2) may preferably be 1:1.5 to 1:7.

The copolymer (B) may preferably have a weight average molecular weight of 50,000 to 180,000 g/mol.

Based on a total weight of the copolymer (B), the copolymer (B) may preferably include 50 to 90 % by weight of an aromatic vinyl compound and 10 to 50 % by weight of a vinyl cyanide compound.

The lubricant (C) may preferably include one or more selected from the group consisting of an aliphatic amide-based lubricant, a fatty acid ester-based lubricant, montan-based wax, and olefin-based wax.

The thermoplastic resin composition may include an antioxidant, a UV stabilizer, or a mixture thereof.

The thermoplastic resin composition may preferably have a tensile strength of 450 kgf/cm² or more as measured according to ASTM D638.

The thermoplastic resin composition may preferably have an elongation of 28 % or more as measured according to ASTM D638.

In accordance with still another aspect of the present invention, provided is a method of preparing a thermoplastic resin composition, the method including kneading and extruding 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C) at 200 to 300 °C and 100 to 300 rpm to obtain an extrudate, wherein, based on 100 % by weight in total of the extrudate, the extrudate has a total rubber content of 15 to 21 % by weight as measured by FT-IR.

In accordance with still another aspect of the present invention, provided is a method of preparing a thermoplastic resin composition, the method including kneading and extruding 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C) at 200 to 300 °C and 100 to 300 rpm to obtain a thermoplastic resin composition, wherein the thermoplastic resin composition has a surface hardness of 95 or more as measured according to ASTM D785.

In accordance with yet another aspect of the present invention, provided is a molded article including the thermoplastic resin composition.

The molded article may preferably be a calender-processed product.

### [Advantageous Effects]

According to the present invention, the present invention has an effect of providing a thermoplastic resin composition that does not contain phthalate-based compounds, which are environmental hormones harmful to the human body; does not emit toxic gases in case of fire; and is capable of securing excellent appearance and durability due to excellent tensile strength, elongation, surface gloss, and surface hardness while having processability equal or superior to that of PVC resins which are conventional materials for calendering, a method of preparing the thermoplastic resin composition, and a molded article manufactured using the thermoplastic resin composition.

In addition, since the thermoplastic resin composition according to the present invention has excellent calender processability, a film can be manufactured using the thermoplastic resin composition instead of a PVC resin, and the film can be used as a surface finishing material for furniture.

### [Best Mode]

Hereinafter, a thermoplastic resin composition of the present invention, a method of preparing the same, and a molded article manufactured using the same will be described in detail.

The present inventors confirmed that, when a lubricant was added in a predetermined content to a base resin including two types of alkyl acrylate-aromatic vinyl compound-vinyl cyanide compound graft copolymers each having a specific average particle diameter and an aromatic vinyl compound-vinyl cyanide compound copolymer in a predetermined content ratio, and the content of rubber contained in the thermoplastic resin composition was adjusted within a predetermined range, phthalate-based compounds, which are environmental hormones harmful to the human body, were not included; no toxic gases were generated in case of fire; excellent appearance and durability were secured due to excellent tensile strength, elongation, surface gloss, and surface hardness; processability equal or superior to that of PVC resins, which are conventional materials for calendaring, was secured, and the thermoplastic resin composition had an effect of replacing the PVC resin. Based on these results, the present inventors conducted further studies to complete the present invention.

The thermoplastic resin composition of the present invention includes 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C). In this case, based on 100 % by weight in total of the thermoplastic resin composition, a total content of rubber as measured by FT-IR is 15 to 21 % by weight. In this case, phthalate-based compounds, which are environmental hormones harmful to the human body, are not included, no toxic gases are generated in case of fire, tensile strength and elongation are excellent, processability equal or superior to that of PVC resins, which are conventional materials for calendaring, is secured, durability is secured due to excellent scratch resistance, and an effect of replacing a PVC material is obtained.

Hereinafter, the thermoplastic resin composition of the present invention will be described in detail for each component.

### (A-1) Alkyl acrylate-aromatic vinyl compound-vinyl cyanide compound graft copolymer containing alkyl acrylate rubber having average particle diameter of 50 to 200 nm

For example, the alkyl acrylate rubber of the graft copolymer (A-1) may have an average particle diameter of 50 to 200 nm, preferably 80 to 180 nm, more preferably 110 to 160 nm. Within this range, excellent mechanical properties and processability may be obtained.

In the present disclosure, the average particle diameter may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 µsec.

For example, based on a total weight of the base resin, the graft copolymer (A-1) may be included in an amount of 3 to 22 % by weight, preferably 3 to 17 % by weight, more preferably 4 to 10 % by weight. Within this range, mechanical properties, such as tensile strength and elongation, surface gloss, surface hardness, and fluidity may be excellent.

The graft copolymer (A-1) may preferably include alkyl acrylate rubber (core) and a shell surrounding the core and including an aromatic vinyl compound and a vinyl cyanide compound. In this case, tensile strength, elongation, and surface gloss may be excellent.

For example, based on a total weight of the graft copolymer (A-1), the graft copolymer (A-1) may include alkyl acrylate rubber in an amount of 30 to 70 % by weight, preferably 35 to 65 % by weight, more preferably 40 to 60 % by weight. Within this range, tensile strength, elongation, and processability may be excellent.

For example, based on a total weight of the graft copolymer (A-1), the graft copolymer (A-1) may include an aromatic vinyl compound in an amount of 20 to 50 % by weight, preferably 25 to 45 % by weight, more preferably 30 to 40 % by weight. Within this range, surface gloss, surface hardness, and processability may be excellent.

For example, based on a total weight of the graft copolymer (A-1), the graft copolymer (A-1) may include a vinyl cyanide compound in an amount of 1 to 25 % by weight, preferably 5 to 20 % by weight, more preferably 10 to 20 % by weight. Within this range, surface gloss, surface hardness, and processability may be excellent.

For example, the alkyl acrylate rubber of the present invention may be alkyl acrylate rubber containing an alkyl group having 1 to 10 carbon atoms. Preferably, the alkyl acrylate rubber may include one or more selected from the group consisting of ethyl acrylate rubber, propyl acrylate rubber, butyl acrylate rubber, hexyl acrylate rubber, octyl acrylate rubber, and 2-ethylhexyl acrylate rubber. More preferably, the alkyl acrylate rubber may be butyl acrylate rubber, 2-ethyl hexyl acrylate rubber, or a mixture thereof. In this case, gloss and surface hardness may be excellent.

In the present disclosure, the aromatic vinyl compound may include, for example, one or more selected from the group consisting of styrene, α-methyl styrene, o-methyl styrene, ρ-methyl styrene, m-methyl styrene, ethyl styrene, isobutyl styrene, t-butyl styrene, o-bromostyrene, ρ-bromostyrene, m-bromostyrene, o-chlorostyrene, ρ-chlorostyrene, m-chlorostyrene, vinyltoluene, vinylxylene, fluorostyrene, and vinylnaphthalene, preferably styrene.

For example, the vinyl cyanide compound of the present invention may include one or more selected from the group consisting of acrylonitrile, methacrylonitrile, phenylacrylonitrile, and α-chloroacrylonitrile, preferably acrylonitrile.

In the present disclosure, a polymer including a certain compound (monomer) means a polymer prepared by polymerizing the compound (monomer), and a unit in the polymer is derived from the compound (monomer).

For example, the graft copolymer (A-1) may be prepared by emulsion polymerization. In this case, surface gloss and surface hardness may be excellent.

Emulsion polymerization methods commonly practiced in the art to which the present invention pertains may be used in the present invention without particular limitation. For example, an emulsion graft polymerization method may be used.

### (A-2) Alkyl acrylate-aromatic vinyl compound-vinyl cyanide compound graft copolymer containing alkyl acrylate rubber having average particle diameter of greater than 200 nm and 600 nm or less

For example, the alkyl acrylate rubber of the graft copolymer (A-2) may have an average particle diameter of greater than 200 nm and 600 nm or less, preferably 250 to 570 nm, more preferably 300 to 550 nm, still more preferably 400 to 550 nm. Within this range, excellent gloss, tensile strength, and surface hardness may be obtained.

For example, based on a total weight of the base resin, the graft copolymer (A-2) may be included in an amount of 20 to 40 % by weight, preferably 23 to 35 % by weight, more preferably 23 to 30 % by weight. Within this range, fluidity and tensile strength may be excellent.

The graft copolymer (A-2) may preferably include alkyl acrylate rubber and a shell surrounding the alkyl acrylate rubber and including an aromatic vinyl compound and a vinyl cyanide compound. In this case, mechanical properties, processability, and surface gloss may be excellent.

For example, based on a total weight of the graft copolymer (A-2), the graft copolymer (A-2) may include alkyl acrylate rubber in an amount of 30 to 70 % by weight, preferably 35 to 65 % by weight, more preferably 40 to 60 % by weight. Within this range, mechanical properties such as tensile strength and elongation, surface gloss, surface hardness, and processability may be excellent.

For example, based on a total weight of the graft copolymer (A-2), the graft copolymer (A-2) may include an aromatic vinyl compound in an amount of 20 to 50 % by weight, preferably 25 to 45 % by weight, more preferably 30 to 40 % by weight. Within this range, tensile strength, elongation, and processability may be excellent.

For example, based on a total weight of the graft copolymer (A-2), the graft copolymer (A-2) may include a vinyl cyanide compound in an amount of 1 to 25 % by weight, preferably 5 to 20 % by weight, more preferably 10 to 20 % by weight. Within this range, surface gloss, surface hardness, and processability may be excellent.

The types of the alkyl acrylate rubber, the aromatic vinyl compound, and the vinyl cyanide compound included in the graft copolymer (A-2) may be the same as the types of the alkyl acrylate rubber, the aromatic vinyl compound, and the vinyl cyanide compound included in the graft copolymer (A-1) of the present invention.

For example, the graft copolymer (A-2) may be prepared by emulsion polymerization. In this case, tensile strength, elongation, gloss, and surface hardness may be excellent.

Emulsion polymerization methods commonly practiced in the art to which the present invention pertains may be used in the present invention without particular limitation. For example, an emulsion graft polymerization method may be used.

For example, a weight ratio (A-1:A-2) of the graft copolymer (A-1) to the graft copolymer (A-2) may be 1:1.5 to 1:7, preferably 1:2.5 to 1:6, more preferably 1:3 to 1:6, still more preferably 1:4 to 1:5.5. Within this range, tensile strength, elongation, gloss, surface hardness, and processability may be excellent.

For example, a difference between the average particle diameter of the acrylate rubber of the graft copolymer (A-1) and the average particle diameter of the acrylate rubber of the graft copolymer (A-2) may be 100 to 550 nm, preferably 150 to 500 nm, more preferably 200 to 450 nm, still more preferably 250 to 450 nm. Within this range, tensile strength, elongation, surface gloss, and surface hardness may be further improved.

For example, based on 100 % by weight in total of the base resin, a sum of the graft copolymer (A-1) and the graft copolymer (A-2) may be 25 to 50 % by weight, preferably 30 to 45 % by weight, more preferably 30 to 40 % by weight. Within this range, tensile strength, elongation, surface gloss, surface hardness, and fluidity may be excellent, thereby improving processability.

### (B) Aromatic vinyl compound-vinyl cyanide compound copolymer

For example, based on a total weight of the base resin, the copolymer (B) may be included in an amount of 50 to 72 % by weight, preferably 55 to 70 % by weight, more preferably 60 to 70 % by weight. Within this range, tensile strength, elongation, surface hardness, and processability may be excellent.

For example, the copolymer (B) may have a weight average molecular weight of 50,000 to 180,000 g/mol, preferably 60,000 to 180,000 g/mol, more preferably 70,000 to 180,000 g/mol, still more preferably 80,000 to 180,000 g/mol. Within this range, mechanical properties such as tensile strength and elongation, surface gloss, and surface hardness may be excellent.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 ul, column model: 1× PLgel 10 um MiniMix-B (250 × 4.6 mm) + 1× PLgel 10 um MiniMix-B (250 × 4.6 mm) + 1× PLgel 10 um MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, based on a total weight of the copolymer (B), the copolymer (B) may include an aromatic vinyl compound in an amount of 50 to 90 % by weight, preferably 60 to 80 % by weight, more preferably 65 to 75 % by weight. Within this range, mechanical properties such as tensile strength and elongation, surface gloss, and surface hardness may be excellent.

For example, based on a total weight of the copolymer (B), the copolymer (B) may include a vinyl cyanide compound in an amount of 10 to 50 % by weight, preferably 20 to 40 % by weight, more preferably 25 to 35 % by weight. Within this range, mechanical properties such as tensile strength and elongation, surface gloss, and surface hardness may be excellent.

The types of the aromatic vinyl compound and the vinyl cyanide compound included in the copolymer (B) may be the same as the types of the aromatic vinyl compound and the vinyl cyanide compound included in the graft copolymer (A-1) of the present invention.

The copolymer (B) may preferably be a styrene-acrylonitrile copolymer (SAN resin), an α-methylstyrene-acrylonitrile copolymer (heat-resistant SAN resin), or a mixture thereof, more preferably a styrene-acrylonitrile copolymer (SAN resin). In this case, surface gloss, surface hardness, and processability may be excellent.

For example, the copolymer (B) may be prepared by solution polymerization, bulk polymerization, emulsion polymerization, or suspension polymerization, preferably bulk polymerization. In this case, mechanical properties may be excellent.

Solution polymerization, bulk polymerization, emulsion polymerization, and suspension polymerization methods commonly practiced in the art to which the present invention pertains may be used in the present invention without particular limitation.

### (C) Lubricant

For example, based on 100 parts by weight of the base resin, the lubricant (C) may be included in an amount of 0.6 to 1.9 parts by weight, preferably 0.8 to 1.8 parts by weight, more preferably 0.8 to 1.5 parts by weight. Within this range, tensile strength, elongation, gloss, and surface hardness may be excellent. In addition, due to excellent calender processability, sheet deformation or damage may be prevented during calendering, and a sheet may be detached from/attached to a roll. Thus, an effect of replacing PVC materials may be obtained.

For example, the lubricant (C) may include one or more selected from the group consisting of an aliphatic amide-based lubricant, a fatty acid ester-based lubricant, montan-based wax, and olefin-based wax, preferably a fatty acid ester-based lubricant, more preferably pentaerythrityl tetrastearate. In this case, tensile strength, elongation, gloss, and surface hardness may be excellent, the thermoplastic resin composition of the present invention may be used for calendering instead of a PVC resin, and calender processability may be excellent.

For example, the aliphatic amide-based lubricant may include one or more selected from the group consisting of stearamide, behanamide, ethylene bis(stearamide), N,N'-ethylene bis(12-hydroxystearamide), erucamide, oleamide, and ethylene bisoleamide. In this case, tensile strength, elongation, gloss, and surface hardness may be excellent, the thermoplastic resin composition of the present invention may be used for calendering instead of a PVC resin, and calender processability may be excellent.

For example, the fatty acid ester-based lubricant may include one or more selected from the group consisting of fatty acid esters of alcohols or polyhydric alcohols, hardened oil, butyl stearate, stearic acid monoglyceride, pentaerythritol tetrastearate, stearyl stearate, ester wax, and alkyl phosphate ester, preferably pentaerythritol tetrastearate. In this case, tensile strength, elongation, gloss, and surface hardness may be excellent, the thermoplastic resin composition of the present invention may be used for calendering instead of a PVC resin, and calender processability may be excellent.

For example, the montan-based wax may be montan wax or montan ester wax. In this case, tensile strength, elongation, gloss, and surface hardness may be excellent, the thermoplastic resin composition of the present invention may be used for calendering instead of a PVC resin, and calender processability may be excellent.

For example, the olefin-based wax may be polyolefin-based wax, preferably polyethylene wax, polypropylene wax, or a mixture thereof, more preferably polyethylene wax, still more preferably oxidized high-density polyethylene wax. In this case, tensile strength, elongation, gloss, and surface hardness may be excellent, the thermoplastic resin composition of the present invention may be used for calendering instead of a PVC resin, and calender processability may be excellent.

### Additives

For example, the thermoplastic resin composition may include an antioxidant, a UV stabilizer, or a mixture thereof. In this case, the required physical properties may be efficiently implemented without deterioration of the intrinsic physical properties of the thermoplastic resin composition of the present invention.

For example, based on 100 parts by weight of the base resin, the antioxidant may be included in an amount of 0.1 to 2 parts by weight, preferably 0.2 to 1.5 parts by weight, more preferably 0.3 to 1 part by weight. Within this range, heat resistance may be improved.

For example, the antioxidant may include one or more selected from the group consisting of a phenolic antioxidant, a phosphite-based antioxidant, and a thioether-based antioxidant, preferably a phenolic antioxidant or a phosphite-based antioxidant.

For example, the phenolic antioxidant may include one or more selected from the group consisting of tetrakis methylene 3-(3,5-di-tert-butyl-4-hydroxyphenyl)propionate methane, 1,3,5-tris-(4-t-butyl-3-hydroxy-2,6-dimethylbenzene)-1,3,5-triazine-2,4,6-(1H,3H,5H)-trione, and 1,3,5-tris-(3,5-di-t-butyl-4-hydroxybenzyl)-s-triazine-2,4,6-(1H,3H,5H)-trione.

For example, the phosphite-based antioxidant may be trisnonylphenylphosphite, tris-(2,4-di-tert-butylphenyl)phosphite, bis(2,4-di-tert-butylphenyl)pentaerythritol diphosphite, or a mixture thereof.

For example, the thioether-based antioxidant may include one or more selected from the group consisting of dilauryl thiodipropionate, dimyristyl thiodipropionate, lauryl stearyl thiodipropionate, distearyl thiodipropionate, dimethyl thiodipropionate, 2-mercaptobenzimidazole, phenothiazine, octadecyl thioglycollate, butyl thioglycollate, octyl thioglycolate, and thiocresol.

For example, based on 100 parts by weight of the base resin, the UV stabilizer may be included in an amount of 0.1 to 3 parts by weight, preferably 0.3 to 1.5 parts by weight, more preferably 0.5 to 1 part by weight. In this case, weather resistance may be improved.

For example, the UV stabilizer may be a hindered amine-based UV stabilizer (HALS), and may preferably include one or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzilmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, a reaction product of 7,7,9,9-tetramethyl-2-cycloundecyl-1-oxa-3,8-diaza-4-oxospiro-[4,5]decane and epichlorohydrin, and poly[[6-(1,1,3,3-tetramethylbutyl)amino]-1,3,5-triazine-2,4-diyl] [(2,2,6,6-tetramethyl-4-piperidinyl)imino]-1,6-hexanediyl[(2,2,6,6-tetramethyl-4-piperidinyl)imino], more preferably bis(2,2,6,6-tetramethyl-4-piperidyl)sebacate, 2-(2H-benzotriazol-2-yl)-4-(1,1,3,3-tetramethylbutyl)phenol, poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof, still more preferably bis(2,2,6,6-tetramethyl-4-piperidyl)sebacate, poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof. In this case, weather resistance may be greatly improved without reducing impact strength and fluidity.

When necessary, the thermoplastic resin composition may further include one or more additives selected from the group consisting of a dye, a pigment, a colorant, an antistatic agent, an antibacterial agent, a processing aid, a metal deactivator, a flame retardant, a smoke suppressant, an anti-drip agent, an anti-friction agent, and an anti-wear agent. At this time, based on 100 parts by weight in total of the base resin, each of the additives may be included in an amount of 0.01 to 5 parts by weight, preferably 0.05 to 3 parts by weight, more preferably 0.1 to 2 parts by weight, still more preferably 0.5 to 1 part by weight. Within this range, the required physical properties may be efficiently implemented without deterioration of the intrinsic physical properties of the thermoplastic resin composition of the present invention.

### Thermoplastic resin composition

Based on a total weight of the thermoplastic resin composition, the thermoplastic resin composition may have a total rubber content of preferably 15 to 21 % by weight, more preferably 15 to 20 % by weight, still more preferably 15 to 19 % by weight, still more preferably 15 to 18 % by weight as measured by FT-IR. Within this range, tensile strength, elongation, gloss, and surface hardness may be excellent. In addition, due to excellent calender processability, the thermoplastic resin composition may be used instead of a PVC resin.

When a 3 mm thick specimen is pulled at a cross-head speed of 50 mm/min and the cutting point of the specimen is measured according to ASTM D638, the thermoplastic resin composition may have a tensile strength of preferably 450 kgf/cm² or more, more preferably 470 kgf/cm² or more, still more preferably 500 kgf/cm² or more, still more preferably 500 to 650 kgf/cm². Within this range, physical property balance may be excellent, and processability, particularly calender processability, may be excellent. Thus, the thermoplastic resin composition may be used instead of a PVC resin.

The thermoplastic resin composition may have an elongation of preferably 28 % or more, more preferably 28 to 60 %, still more preferably 28 to 50 %, still more preferably 28 to 45 % as measured at a cross-head speed of 50 mm/min using a 3 mm thick specimen according to ASTM D638. Within this range, physical property balance may be excellent, and processability, particularly calender processability, may be excellent. Thus, the thermoplastic resin composition may be used instead of a PVC resin.

The thermoplastic resin composition may have a surface hardness of preferably 95 or more, more preferably 100 or more, still more preferably 100 to 115 as measured according to ASTM D785. Within this range, physical property balance and durability may be excellent.

The thermoplastic resin composition may have a surface gloss of preferably 90 GU or more, more preferably 90 to 100 GU as measured at 45° using a 1/4" thick injection specimen according to ASTM D528. Within this range, due to excellent physical property balance and transparency, an aesthetically pleasing appearance may be realized.

The thermoplastic resin composition may have a pencil hardness of B or more, preferably HB or more as measured according to ASTM D219. Within this range, physical property balance and durability may be excellent.

When a 0.3 mm thick sheet is manufactured using the thermoplastic resin composition at a roll temperature of 180 to 220 °C, a calender roll speed of 8 to 12 rpm, and a calender roll interval of 0.3 mm, the thermoplastic resin composition is plasticized on the roll surface, and application time is less than 3 minutes. In addition, the formed sheet may be detached from/attached to the roll without deformation or damage, and calender processability may be excellent.

Hereinafter, a method of preparing the thermoplastic resin composition of the present invention and a molded article including the thermoplastic resin composition will be described. In describing the method of preparing the thermoplastic resin composition and the molded article including the thermoplastic resin composition, all of the above-described thermoplastic resin composition is included.

### Method of preparing thermoplastic resin composition

A method of preparing a thermoplastic resin composition of the present invention includes a step of kneading and extruding 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C) at 200 to 300 °C and 100 to 300 rpm to obtain an extrudate. In this case, based on 100 % by weight in total of the extrudate, the extrudate has a total rubber content of 15 to 21 % by weight as measured by FT-IR. In this case, phthalate-based compounds, which are environmental hormones harmful to the human body, are not included, no toxic gases are generated in case of fire, tensile strength and elongation are excellent, processability equal or superior to that of PVC resins, which are conventional materials for calendaring, is secured, appearance and durability are secured due to excellent tensile strength, elongation, surface gloss, and surface hardness, and an effect of replacing a PVC material is obtained due to excellent calender processability.

For example, the kneading and extrusion may be performed using a single-screw extruder, a twin-screw extruder, or a Banbury mixer. In this case, the composition may be uniformly dispersed and may have excellent compatibility.

For example, the kneading and extrusion may be performed at a barrel temperature of 200 to 300 °C, preferably 210 to 280 °C, more preferably 220 to 270 °C. In this case, throughput per unit time may be appropriate, melt-kneading may be sufficiently performed, and thermal decomposition of resin components may be prevented.

For example, the kneading and extrusion may be performed at a screw rotation rate of 100 to 500 rpm, 150 to 400 rpm, 100 to 350 rpm, or 200 to 310 rpm, preferably 250 to 350 rpm. Within this range, throughput per unit time may be increased, and process efficiency may be excellent.

The extrudate may preferably be in the form of pellets or plates.

In the present disclosure, the plate form refers to a plate form commonly known in the art to which the present invention pertains without particular limitation. For example, the plate form may include a flat shape, a sheet shape, a film shape, and the like.

### Molded article

For example, a molded article of the present invention may include the thermoplastic resin composition of the present invention. In this case, phthalate-based compounds, which are environmental hormones harmful to the human body, are not included, no toxic gases are generated in case of fire, processability equal or superior to that of PVC resins, which are conventional materials for calendaring, is secured, appearance and durability are secured due to excellent tensile strength, elongation, surface gloss, and surface hardness, and a high-quality finishing material capable of replacing PVC resins may be provided.

For example, the molded article may be a calendered product, preferably a finishing material for buildings, a finishing material for roofs, or a finishing material for furniture. In this case, due to excellent appearance and durability, high quality required in the market may be realized.

A method of manufacturing a molded article includes a step of kneading and extruding 100 parts by weight of a base resin including 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C) at 200 to 300 °C and 100 to 300 rpm to obtain an extrudate; and a step of performing calender molding of the extrudate at a molding temperature of 120 to 300 °C to manufacture a molded article. In this case, based on 100 % by weight in total of the extrudate, the extrudate has a total rubber content of 15 to 21 % by weight as measured by FT-IR. In this case, phthalate-based compounds, which are environmental hormones harmful to the human body, are not included, no toxic gases are generated in case of fire, tensile strength and elongation are excellent, processability equal or superior to that of PVC resins, which are conventional materials for calendaring, is secured, appearance and durability are secured due to excellent surface gloss and scratch resistance, and a high-quality finishing material capable of replacing PVC resins may be provided.

For example, the calender molding refers to rolling an extrudate by a calendering process involving calender rolls. The calender molding may be performed using a method commonly used in the art to which the present invention pertains, without particular limitation. Preferably, the calender molding may be performed using a method including a step of mixing sheet materials at 130 to 220 °C using a mixer, a step of forming a base sheet at 170 to 240 °C using the mixed materials, and a step of forming a sheet at 140 to 220 °C using the base sheet and calender rolls. Here, the step of forming a base sheet may be performed, for example, using mixing rolls.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

* (A-1) ASA graft copolymer: An ASA graft copolymer (graft copolymer including 50 % by weight of butyl acrylate rubber, 35 % by weight of styrene, and 15 % by weight of acrylonitrile) prepared by emulsion polymerization and containing alkyl acrylate rubber having an average particle diameter of 150 nm
* (A-2) ASA graft copolymer: An ASA graft copolymer (graft copolymer including 50 % by weight of butyl acrylate rubber, 35 % by weight of styrene, and 15 % by weight of acrylonitrile) prepared by emulsion polymerization and containing alkyl acrylate rubber having an average particle diameter of 450 nm
* (B) SAN copolymer prepared by bulk polymerization: A copolymer (weight average molecular weight: 150,000 g/mol) including 70 % by weight of styrene and 30 % by weight of acrylonitrile
* (C) Lubricant: Pentaerythritol tetrastearate
* (D) Additives:
   - Antioxidant: Irganox 1076 (0.5 parts by weight, BASF Co.) and Irgafox 168 (0.5 parts by weight, BASF Co.)
   - UV stabilizer: Tinuvin 770 (0.5 parts by weight, BASF Co.) and Sunsorb 329 (0.5 parts by weight, Sunfine Global Co.)

### Examples 1 to 7 and Comparative Examples 1 to 9

According to the contents shown in Tables 1 and 2 below, the components shown in Tables 1 and 2 and 2 parts by weight of the additives were kneaded and extruded at an extrusion temperature of 230 °C, a feed rate of 20 kg/hr, and a screw speed of 300 rpm using an extruder (SM twin-screw extruder, 25Φ) to obtain pellets. The obtained pellets were injected at an injection temperature of 200 to 240 °C and a screw speed of 100 to 200 rpm using an injection machine (ENGEL 120MT) to obtain a specimen for evaluating appearance and measuring physical properties. In addition, using a roll mill (MR-LM0820, Mirae RPM Co.) in which two calender rolls having a diameter of 30 cm were installed at an interval of 0.3 mm, calendering of the resin in pellet form was performed while maintaining the temperature of the rolls at 180 to 210 °C to obtain a sheet having a thickness of 0.3 mm.

### [Test Examples]

The properties of the pellets and injection specimens prepared in Examples 1 to 7 and Comparative Examples 1 to 9 were measured according to the following methods, and the results are shown in Tables 1 and 2.
* Rubber content (wt%): Rubber content was quantitatively measured using FT-IR.
* Tensile strength (kgf/cm²): According to ASTM D638, the 3mm thick specimen was pulled at a cross-head speed of 50 mm/min, and then the cutting point of the specimen was measured.
* Elongation (%): The elongation of the 3 mm thick specimen was measured at a cross-head speed of 50 mm/min according to ASTM D638.
* Surface hardness: Rockwell hardness was measured using the 1/4" thick specimen in an R-scale according to ASTM D785.
* Surface gloss (GU): The surface gloss of the 3.2 mm thick injection specimen was measured at an angle of incidence of 45° using a gloss meter according to ASTM D523. High gloss at 45° means excellent surface gloss. Here, the surface gloss unit is a gloss unit (GU).
* Pencil hardness: Pencil hardness was measured according to ASTM D219.
* Processability: The thermoplastic resin composition pellets were extruded at a roll temperature of 180 to 220 °C, at a calender roll speed of 8 to 12 rpm, and at a calender roll interval of 0.3 mm using a roll mill to obtain a 0.3 mm thick sheet. At this time, the plasticization and roll application and roll stabilization times of the thermoplastic resin composition were measured, and processability was evaluated as follows. At this time, when the roll stabilization time was less than 3 minutes, the processability was evaluated as excellent.
∘: When forming a sheet, the resin was stably applied on the roll surface, stabilization was achieved within 3 minutes, and the formed sheet could be detached from/attached to the roll without deformation or damage.
X: When forming a sheet, the resin was unstably applied on the roll surface, stabilization time exceeded 3 minutes, and deformation or damage occurred when the formed sheet was detached from/attached to the roll.

**[Table 1]**

| Classificat ion | Examp le 1 | Examp le 2 | Examp le 3 | Examp le 4 | Examp le 5 | Examp le 6 | Examp le 7 |
|---|---|---|---|---|---|---|---|
| (A-1) ASA (wt%) | 5 | 10 | 15 | 5 | 10 | 5 | 5 |
| (A-2) ASA (wt%) | 25 | 25 | 25 | 30 | 30 | 25 | 25 |
| (B) SAN (wt%) | 70 | 65 | 60 | 65 | 60 | 70 | 70 |
| (C) Lubricant (parts by weight) | 1 | 1 | 1 | 1 | 1 | 0.7 | 1.5 |
| (D) Additives (parts by weight) | 2 | 2 | 2 | 2 | 2 | 2 | 2 |
| Rubber content (wt%) | 15 | 17.5 | 20 | 17.5 | 20 | 15 | 15 |

| Physical properties | | | | | | | |
|---|---|---|---|---|---|---|---|
| Tensile strength (kgf/cm²) | 550 | 520 | 500 | 460 | 500 | 550 | 550 |
| Elongation (%) | 30 | 35 | 40 | 40 | 40 | 30 | 30 |
| Surface hardness | 105 | 100 | 95 | 100 | 95 | 105 | 105 |
| Surface gloss (GU) | 92 | 93 | 90 | 93 | 90 | 92 | 92 |
| Pencil hardness | HB | B | B | B | B | HB | HB |
| Processabil ity | ○ | ○ | ○ | ○ | ○ | ○ | ○ |

**[Table 2]**

| Classification | Comparative Examples | | | | | | | | |
|---|---|---|---|---|---|---|---|---|---|
| | 1 | 2 | 3 | 4 | 5 | 6 | 7 | 8 | 9 |
| (A-1) ASA (wt%) | 1 | 10 | 15 | 30 | 10 | 10 | 10 | 5 | 34 |
| (A-2) ASA (wt%) | 25 | 15 | 30 | 25 | 50 | 25 | 25 | 40 | 1 |
| (B) SAN (wt%) | 74 | 75 | 55 | 45 | 40 | 65 | 65 | 55 | 65 |
| (C) Lubricant (parts by weight) | 1 | 1 | 1 | 1 | 1 | 0.1 | 3 | 1 | 1 |
| (D) Additives (parts by weight) | 2 | 2 | 2 | 2 | 2 | 2 | 2 | 2 | 2 |
| Rubber content (wt%) | 13 | 12.5 | 22.5 | 27.5 | 30 | 17.5 | 17.5 | 22.5 | 17.5 |

| Physical properties | | | | | | | | | |
|---|---|---|---|---|---|---|---|---|---|
| Tensile strength (kgf/cm²) | 600 | 650 | 450 | 400 | 350 | 500 | 500 | 380 | 550 |
| Elongation (%) | 25 | 20 | 50 | 60 | 120 | 20 | 40 | 80 | 30 |
| Surface hardness | 110 | 110 | 90 | 85 | 80 | 100 | 100 | 86 | 105 |
| Surface gloss (GU) | 95 | 97 | 90 | 90 | 90 | 93 | 93 | 90 | 95 |
| Pencil hardness | F | F | B | 2B | 3B | B | B | 2B | B |
| Processability | X | X | ○ | ○ | ○ | X | X | ○ | X |

In Tables 1 and 2, the content of each of (A-1), (A-2), and (B) is given in % by weight based on a total weight of (A-1), (A-2), and (B), and the content of each of (C) and (D) is given in parts by weight based on 100 parts by weight in total of (A-1), (A-2), and (B).

As shown in Tables 1 and 2, compared to Comparative Examples 1 to 9, the thermoplastic resin compositions (Examples 1 to 7) according to the present invention exhibited excellent tensile strength, elongation, surface hardness, surface gloss, pencil hardness, and processability, and thus could be used to manufacture a high-quality calender-molded article.

Specifically, in the case of Comparative Examples 1 and 2 in which the rubber content was less than the range of the present invention, and the content of the graft copolymer (A-1) or the content of the graft copolymer (A-2) was less than the range of the present invention, elongation and pencil hardness were low, and processability was poor.

In addition, in the case of Comparative Example 3 in which the rubber content exceeded the range of the present invention, tensile strength and surface hardness were low. In the case of Comparative Examples 4 and 5 in which the rubber content exceeded the range of the present invention, the content of the copolymer (B) was outside the range of the present invention, and the content of the graft copolymer (A-1) or the content of the graft copolymer (A-2) was outside the range of the present invention, tensile strength, surface hardness, and pencil hardness were poor.

In addition, in the case of Comparative Examples 6 and 7 in which the content of the lubricant (C) was outside the range of the present invention, processability was poor. In particular, in the case of Comparative Example 6, elongation was also low. In the case of Comparative Example 8 in which the rubber content exceeded the range of the present invention, tensile strength, surface hardness, and pencil hardness were poor.

In addition, in the case of Comparative Example 9 in which the rubber content was within the range of the present invention, but the contents of the graft copolymer (A-1) and graft copolymer (A-2) were outside the range of the present invention, when forming a sheet, due to poor processability, the sheet was damaged.

In conclusion, when a lubricant was added in a predetermined content to a base resin including two types of alkyl acrylate-aromatic vinyl compound-vinyl cyanide compound graft copolymers each having a specific average particle diameter and an aromatic vinyl compound-vinyl cyanide compound copolymer in a predetermined content ratio, and the content of rubber in a thermoplastic resin composition was adjusted within a predetermined range, the present invention had an effect of providing a thermoplastic resin composition that does not contain phthalate-based compounds, which are environmental hormones harmful to the human body; does not emit toxic gases in case of fire; has excellent tensile strength, elongation, surface gloss, and surface hardness while having processability equal or superior to that of PVC resins which are conventional materials for calendaring; and is capable of imparting excellent appearance and durability.

## Claims

1. A thermoplastic resin composition, comprising:
100 parts by weight of a base resin comprising 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and
0.6 to 1.9 parts by weight of a lubricant (C),
wherein, based on 100 % by weight in total of the thermoplastic resin composition, a total content of rubber as measured by FT-IR is 15 to 21 % by weight.

2. The thermoplastic resin composition according to claim 1, wherein, based on a total weight of the graft copolymer (A-1), the graft copolymer (A-1) comprises 30 to 70 % by weight of alkyl acrylate rubber, 20 to 50 % by weight of an aromatic vinyl compound, and 1 to 25 % by weight of a vinyl cyanide compound.

3. The thermoplastic resin composition according to claim 1, wherein, based on a total weight of the graft copolymer (A-2), the graft copolymer (A-2) comprises 30 to 70 % by weight of alkyl acrylate rubber, 20 to 50 % by weight of an aromatic vinyl compound, and 1 to 25 % by weight of a vinyl cyanide compound.

4. The thermoplastic resin composition according to claim 1, wherein a weight ratio (A-1:A-2) of the graft copolymer (A-1) to the graft copolymer (A-2) is 1:1.5 to 1:7.

5. The thermoplastic resin composition according to claim 1, wherein the copolymer (B) has a weight average molecular weight of 50,000 to 180,000 g/mol.

6. The thermoplastic resin composition according to claim 1, wherein, based on a total weight of the copolymer (B), the copolymer (B) comprises 50 to 90 % by weight of an aromatic vinyl compound and 10 to 50 % by weight of a vinyl cyanide compound.

7. The thermoplastic resin composition according to claim 1, wherein the lubricant (C) comprises one or more selected from the group consisting of an aliphatic amide-based lubricant, a fatty acid ester-based lubricant, montan-based wax, and olefin-based wax.

8. The thermoplastic resin composition according to claim 1, wherein the thermoplastic resin composition comprises an antioxidant, a UV stabilizer, or a mixture thereof.

9. The thermoplastic resin composition according to claim 1, wherein the thermoplastic resin composition has a surface hardness of 95 or more as measured according to ASTM D785.

10. The thermoplastic resin composition according to claim 1, wherein the thermoplastic resin composition has a tensile strength of 450 kgf/cm² or more as measured according to ASTM D638.

11. The thermoplastic resin composition according to claim 1, wherein the thermoplastic resin composition has an elongation of 28 % or more as measured according to ASTM D638.

12. A method of preparing a thermoplastic resin composition, comprising kneading and extruding 100 parts by weight of a base resin comprising 3 to 22 % by weight of an alkyl acrylate-aromatic vinyl compound-vinyl cyanide compound graft copolymer (A-1) containing alkyl acrylate rubber having an average particle diameter of 50 to 200 nm, 20 to 40 % by weight of an alkyl acrylate-aromatic vinyl compound-vinyl cyanide compound graft copolymer (A-2) containing alkyl acrylate rubber having an average particle diameter of greater than 200 nm and 600 nm or less, and 50 to 72 % by weight of an aromatic vinyl compound-vinyl cyanide compound copolymer (B); and 0.6 to 1.9 parts by weight of a lubricant (C) at 200 to 300 °C and 100 to 300 rpm to obtain an extrudate,
wherein, based on 100 % by weight in total of the extrudate, the extrudate has a total rubber content of 15 to 21 % by weight as measured by FT-IR.

13. A molded article, comprising the thermoplastic resin composition according to any one of claims 1 to 11.

14. The molded article according to claim 13, wherein the molded article is a calender-processed product.
